# EUROPEAN PATENT APPLICATION

(11) **EP 3 128 156 A1**
(43) Date of publication of application: **08.02.2017**
(21) Application number: 16181183.1
(22) Date of filing: 26.07.2016
(51) Int. Cl.: F02C 7/045

(54) **INLET SYSTEM FOR A GAS TURBINE**

(30) Priority: 07.08.2015 US 201514821031
(71) Applicant: General Electric Company, Schenectady, NY 12345 (US)
(72) Inventor: PONYAVIN, Valery Ivanovich, Greenville, SC South Carolina 29615 (US); ZHANG, Hua, 29615, SC South Carolina (US); VENUGOPAL SETTY, Dinesh, 560066 Bangalore (IN); MERCHANT, Laxmikant, 560066 Bangalore (IN)
(74) Representative: Lee, Brenda

(57) **Abstract**

An inlet system (38) for a gas turbine includes an inlet duct (40), a silencer assembly (46) disposed downstream from the inlet duct (40) and an outlet duct (44) disposed downstream from the silencer assembly (46). The silencer assembly (46) may include a duct (50) and a plurality of laterally spaced baffles (48) disposed within the duct (50). The baffles (48) may be arranged substantially parallel to a flow of air flowing through the inlet system (38). Each baffle (48) includes a leading edge portion (106), a trailing edge portion (108) portion that is longitudinally spaced from the leading edge portion (106) and a pair of laterally opposing side walls (102), (104) that extend between the leading and trailing edge portions (108). Each baffle (48) includes at least one acoustic panel (120), (122) that extends at least partially across one side wall (102), (104) of the pair of side walls (102), (104).

## Description

### FIELD OF THE INVENTION

The present invention generally involves an inlet system for a gas turbine. More specifically, the invention relates to silencers of an inlet system for a gas turbine.

### BACKGROUND OF THE INVENTION

A gas turbine generally includes, in serial flow order, a compressor, a combustion section and a turbine. In particular configurations, the gas turbine includes an inlet system positioned upstream from an inlet to the compressor. The inlet system generally includes one or more ducts that define a flow path to the inlet of the compressor. In addition, the inlet system may include various filters, cooling coils, moisture separators, and/or other devices which may be used to purify and otherwise condition air or other working fluid entering the gas turbine.

In particular configurations, the inlet system includes multiple baffles mounted within a section of the ducts between a main inlet to the inlet system and the inlet of the compressor. The baffles may be aligned longitudinally and in parallel with respect to inlet airflow direction and the baffles generally function as silencers for reducing environmental noise created by the airflow as it passes through the ducts. At least some of the baffles may include perforations or holes defined along opposing side walls of the corresponding baffle. A sound absorbing material may be disposed between the opposing side walls.

During operation, the inlet airflow passes longitudinally through gaps defined between laterally adjacent baffles towards the inlet of the compressor. The perforations allow reverberating sound waves to pass through the side walls of the baffles and into the sound absorbing material, thus reducing environmental noise produced by the airflow. Although the perforations and/or absorbing material are generally effective at reducing noise emanating from the inlet system, the perforations may cause a measurable pressure drop within the inlet system due to friction losses of the airflow as it passes across the perforations and/or due to airflow leakage into the perforations. Accordingly, an improved inlet system would be useful.

### BRIEF DESCRIPTION OF THE INVENTION

Aspects and advantages of the invention are set forth below in the following description, or may be obvious from the description, or may be learned through practice of the invention.

One embodiment of the present invention is an inlet system for a gas turbine. The inlet system includes an inlet duct, a silencer assembly disposed downstream from the inlet duct and an outlet duct disposed downstream from the silencer assembly. The silencer assembly may include a duct and a plurality of laterally spaced baffles disposed within the duct. The baffles may be arranged substantially parallel to a flow of air flowing through the inlet system. Each baffle includes a leading edge portion, a trailing edge portion that is longitudinally spaced from the leading edge portion and a pair of laterally opposing side walls that extend between the leading and trailing edges. Each baffle includes at least one acoustic panel that extends at least partially across one side wall of the pair of side walls.

Another embodiment of the present disclosure is an inlet system for a gas turbine. The inlet system includes an inlet duct, a transition duct disposed downstream from the inlet duct, a silencer assembly disposed downstream from the transition duct and an outlet duct that is disposed downstream from the silencer assembly. The silencer assembly includes a duct and a baffle that is disposed within the duct and arranged substantially parallel to a flow of air that flows through the inlet system. The baffle has a leading edge portion, a trailing edge portion that is longitudinally spaced from the leading edge portion and a first side wall that is laterally opposed from a second side wall. The first and second side walls extend between the leading and trailing edges. The silencer assembly further includes a first acoustic panel that extends at least partially across an outer surface of the first side wall and a second acoustic panel that extends at least partially across the second side wall.

The present invention also includes a gas turbine. The gas turbine includes an inlet section, a compressor disposed downstream from the inlet section, a combustion section disposed downstream from the compressor and a turbine disposed downstream from the combustion section. The inlet system includes an inlet duct, a silencer assembly disposed downstream from the inlet duct and an outlet duct disposed downstream from the silencer assembly and in fluid communication with the compressor. The silencer assembly includes a duct and a baffle that is disposed within the duct and arranged substantially parallel to a flow of air that flows from the inlet duct and through the inlet system. The baffle has a leading edge portion, a trailing edge portion that is longitudinally spaced from the leading edge portion and a first side wall that is laterally opposed from a second side wall. The first and second side walls extend between the leading and trailing edges. The silencer assembly further includes a first acoustic panel that extends at least partially across an outer surface of the first side wall and a second acoustic panel that extends at least partially across the second side wall.

Those of ordinary skill in the art will better appreciate the features and aspects of such embodiments, and others, upon review of the specification.

### BRIEF DESCRIPTION OF THE DRAWINGS

A full and enabling disclosure of the present invention is set forth more particularly in the remainder of the specification, including reference to the accompanying figures, in which:
FIG. 1 is a functional block diagram of an exemplary gas turbine that may incorporate various embodiments of the present invention;
FIG. 2 is a side view of an exemplary inlet system of an inlet section of the gas turbine as shown in FIG. 1;
FIG. 3 is a top view of an exemplary silencer assembly as may be incorporated into the inlet system as shown in FIG. 2, according to various embodiments of the present invention;
FIG. 4 is a cross sectional top view of an exemplary baffle of the silencer assembly as shown in FIG. 3, according to at least one embodiment of the present invention;
FIG. 5 is a perspective view of the baffle as shown in FIG. 4, showing a first side wall according to at least one embodiment of the present invention;
FIG. 6 is a perspective view of the baffle as shown in FIG. 4, showing a second side wall according to at least one embodiment of the present invention;
FIG. 7 is a perspective view of the baffle as shown in FIG. 5 including an acoustic panel extending across the first side wall of the baffle according to at least one embodiment of the present invention; and
FIG. 8 is a perspective view of the baffle as shown in FIG. 6, including an acoustic panel extending across the second side wall of the baffle according to at least one embodiment of the present invention.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, and the term "axially" refers to the relative direction that is substantially parallel to an axial centerline of a particular component.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents. Although exemplary embodiments of the present invention will be described generally in the context of an inlet system for a land based power generating gas turbine for purposes of illustration, one of ordinary skill in the art will readily appreciate that embodiments of the present invention may be applied to any inlet system for any type of gas turbine such as a marine or aircraft gas turbine and are not limited to land based power generating gas turbines unless specifically recited in the claims.

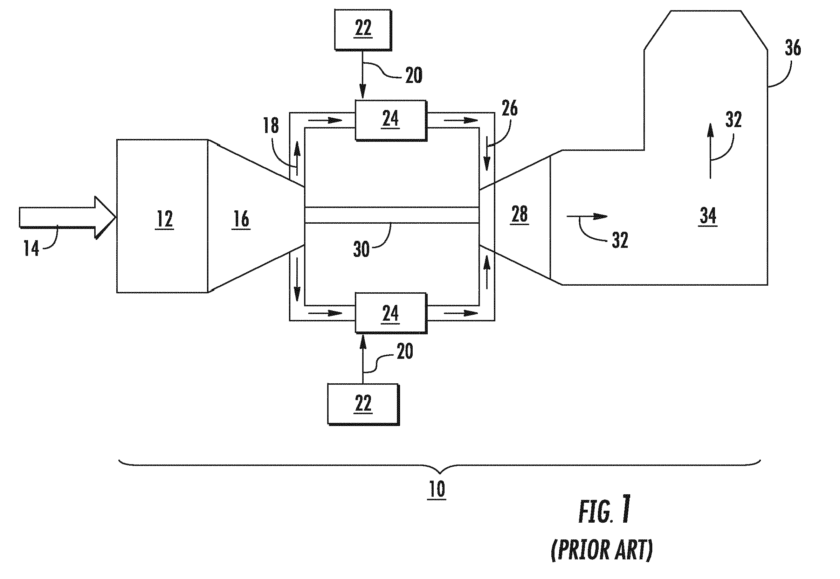

Referring now to the drawings, wherein identical numerals indicate the same elements throughout the figures, FIG. 1 provides a functional block diagram of an exemplary gas turbine 10 that may incorporate various embodiments of the present invention. As shown, the gas turbine 10 generally includes an inlet section 12 that may include a series of filters, cooling coils, moisture separators, and/or other devices to purify and otherwise condition a flow of air 14 or other working fluid entering the gas turbine 10. The air 14 flows from the inlet section 12 to a compressor section where a compressor 16 progressively imparts kinetic energy to the air 14 to produce compressed air 18.

The compressed air 18 is mixed with a fuel 20 from a fuel supply system 22 to form a combustible mixture within one or more combustors 24. The combustible mixture is burned to produce combustion gases 26 having a high temperature, pressure and velocity. The combustion gases 26 flow through a turbine 28 of a turbine section to produce work. For example, the turbine 28 may be connected to a shaft 30 so that rotation of the turbine 28 drives the compressor 16 to produce the compressed air 18. Alternately or in addition, the shaft 30 may connect the turbine 28 to a generator (not shown) for producing electricity. Exhaust gases 32 from the turbine 28 flow through an exhaust section 34 that connects the turbine 28 to an exhaust stack 36 downstream from the turbine 28. The exhaust section 34 may include, for example, a heat recovery steam generator (not shown) for cleaning and extracting additional heat from the exhaust gases 32 prior to release to the environment.

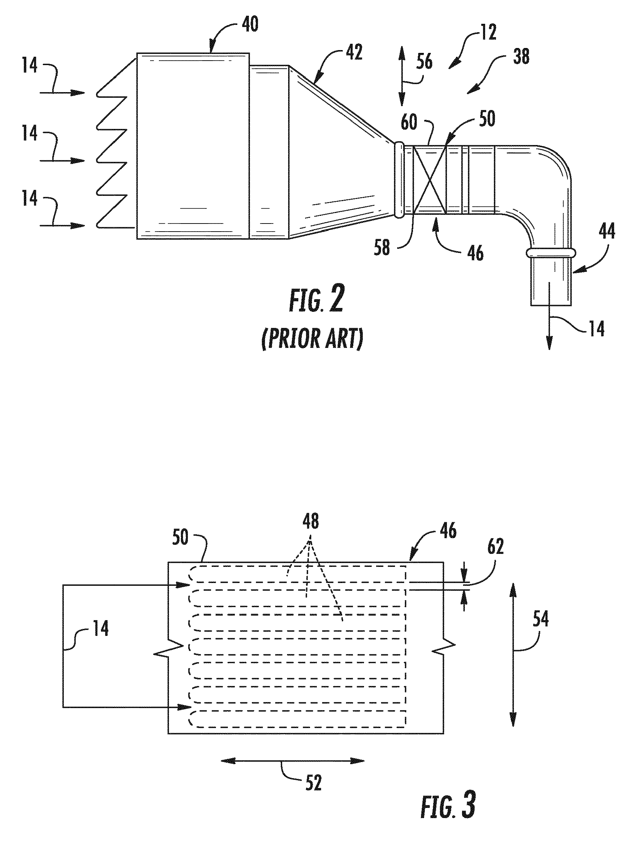

FIG. 2 provides a side view of an exemplary inlet system 38 of the inlet section 12 for the gas turbine 10 as shown in FIG. 1. As shown in FIG. 2, the inlet system 38 may include a main inlet portion or duct 40 configured to receive the flow of air 14 from the surrounding environment, a transition duct 42 positioned downstream from the main inlet portion 40 and an outlet duct 44 disposed downstream from the transition duct 42. The outlet duct 44 is in fluid communication with an inlet to the compressor 16.

In various embodiments, the inlet system 38 includes a silencer assembly 46 disposed downstream from the main inlet portion 40 and/or the transition duct 42. FIG. 3 provides a top view of the silencer assembly 46 according to various embodiments of the present invention. In particular embodiments, as shown in FIG. 3, the silencer assembly 46 includes a plurality of baffles 48, as illustrated in dashed lines, disposed or encased within a duct 50. The baffles 48 extend in a longitudinal direction as indicated by line 52 and a lateral direction as indicated by line 54 in FIG. 3. The baffles 48 also extend in a radial direction as indicated by line 56 between a bottom duct wall 58 and a top duct wall 60 within the duct 50 as shown in FIG. 2. The baffles 48 extend within the duct 50 generally parallel with/to the flow of the air 14 flowing through the inlet system 38. Adjacent baffles 48 are laterally spaced from each other to form a flow gap 62 therebetween. In one embodiment, the adjacent baffles 48 are laterally spaced at about 5 inches apart.

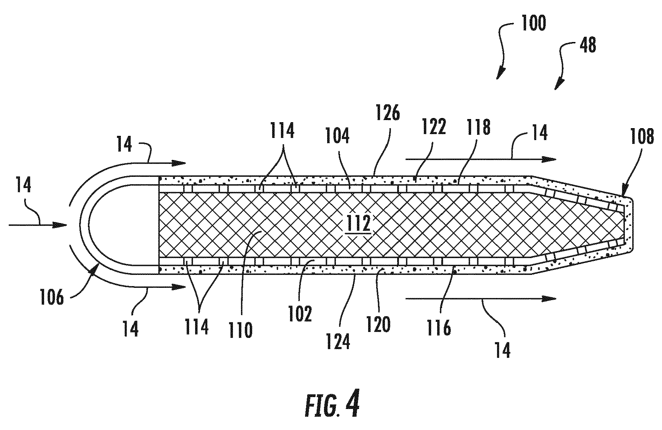

FIG. 4 is a cross sectional top view of an exemplary baffle 100 of the plurality of baffles 48 according to at least one embodiment of the present invention. Baffle 100 may be representative of any number of the baffles 48 illustrated in FIG. 3. In at least one embodiment, the baffle 100 includes a pair of laterally opposing side walls 102, 104. The side walls 102, 104 extend longitudinally between a forward cap or leading edge portion 106 of the baffle 100 and an aft cap or trailing edge portion 108 of the baffle 100. The side walls 102, 104 may be made from any material that is suitable for the environment within the inlet system 38. For example, the side walls 102, 104 may be formed from aluminum, steel or carbon fiber. The baffle 100 may be sized or shaped to fit within the duct 50. In one embodiment, the baffle 100 extends laterally about 96 inches and longitudinally about 6 inches across.

An acoustic or sound absorbing material 110 is provided within a cavity 112 formed between the side walls 102, 104. The sound absorbing material 110 may comprise of any sound absorbing material 110 that is suitable for the purpose of absorbing sound waves. For example, the sound absorbing material 110 may comprise glass wool board, acoustic foam or acoustic spray.

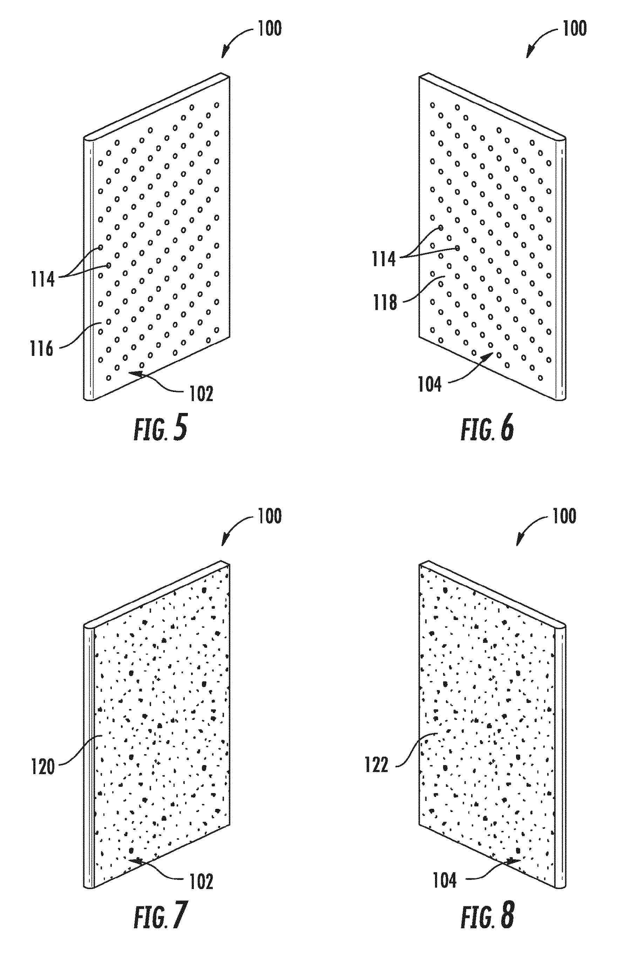

FIG. 5 provides a perspective view of the baffle 100 showing side wall 102 according to at least one embodiment of the present invention. FIG. 6 provides a perspective view of the baffle 100 showing side wall 104 according to at least one embodiment of the present invention. In particular embodiments, as shown in FIGS. 4, 5 and 6 collectively, at least one of the side walls 102, 104 includes perforations, holes or apertures 114 defined along respective outer surfaces 116, 118 of the side walls 102, 104 respectfully. In particular embodiments, the apertures 114 are generally round or oval shaped. In other embodiments, one or more of the apertures 114 may be square, triangular rectangular or have any suitable shape. The apertures 114 provide or define acoustic pathways for sound waves to travel through the side walls 102, 104 of the baffle 100 and into the cavity 112. In this manner, the sound waves may be absorbed by the sound absorbing material 110.

In various embodiments, as shown in FIG. 4, the baffle 100 includes one or more acoustic panels or wraps 120, 122 that extend across the outer surfaces 116, 118 of side walls 102, 104 respectfully. In particular embodiments, the acoustic panels 120, 122 may extend towards and/or around the trialing edge 108. FIG. 7 provides a perspective view of the baffle 100 showing side wall 102 covered with acoustic panel 120 according to at least one embodiment of the present invention. FIG. 8 provides a perspective view of the baffle 100 showing side wall 104 covered with acoustic panel 122 according to at least one embodiment of the present invention.

As shown in FIGS. 4, 7 and 8, the acoustic panels 120, 122 extend across and/or cover the apertures 114 shown in FIGS. 4, 5 and 6, thus providing substantially hydro dynamically smooth outer surfaces 124, 126 to the baffle 100 as compared to the outer surfaces 116, 118 of the uncovered side walls 102, 104. As a result, friction losses typically created by the apertures 114 disposed along the uncovered outer surfaces 116, 118 are reduced, thus reducing pressure drop that is typically created as the air 14 flows across the uncovered outer surface 116, 118. A decrease in pressure drop across the baffle 100 may result in an increase in overall performance of the gas turbine 10.

In particular embodiments, the acoustic panels 120, 122 comprise an acoustically permeable material. In one embodiment, the acoustically permeable material has an outer surface roughness of 1mm or less such that it is within a viscous sub-layer of the air 14 that flows across the baffle 100. In one embodiment, the sound level reduction through the acoustically permeable material should be 1.5db or less. One or more of the acoustic panels 120, 122 may comprise an acoustic fabric such as but not limited to an FR400, FR90, FR600, FR900 or FR7000 Series acoustic fabric such as speaker cloth that is commercially available from Acoustical Solutions, 2420 Grenoble Road, Richmond, V.A. (USA).

This written description uses examples to disclose the invention and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Various aspects and embodiments of the present invention are defined by the following numbered clauses:
1. An inlet system for a gas turbine, comprising:
   an inlet duct, a silencer assembly disposed downstream from the inlet duct and an outlet duct disposed downstream from the silencer assembly, wherein the silencer assembly comprises:
      a duct; and
      a plurality of laterally spaced baffles disposed within the duct and arranged substantially parallel to a flow of air, each baffle having a leading edge portion, a trailing edge portion longitudinally spaced from the leading edge portion and a pair of laterally opposing side walls that extend between the leading and trailing edges;
      wherein each baffle includes at least one acoustic panel that extends at least partially across one side wall of the pair of side walls.
2. The inlet system as in clause 1, wherein each side wall of each baffle comprises a plurality of apertures, wherein at least a portion of the apertures are disposed beneath the acoustic panel.
3. The inlet system as in any preceding clause, wherein each baffle comprises a cavity defined laterally between the opposing side walls.
4. The inlet system as in any preceding clause, further comprising an acoustic material disposed within the cavity.
5. The inlet system as in any preceding clause, wherein the acoustic panel comprises an acoustically permeable material.
6. The inlet system as in any preceding clause, wherein the acoustic panel comprises acoustically permeable material that provides a sound level reduction of less than 1.5db.
7. The inlet system as in any preceding clause, wherein the acoustic panel has a surface roughness of 1mm or less.
8. An inlet system for a gas turbine, comprising:
   an inlet duct, a transition duct disposed downstream from the inlet duct, a silencer assembly disposed downstream from the transition duct and an outlet duct disposed downstream from the silencer assembly, wherein the silencer assembly comprises:
      a duct;
      a baffle disposed within the duct and arranged substantially parallel to a flow of air, the baffle having a leading edge portion, a trailing edge portion longitudinally spaced from the leading edge portion and a first side wall laterally opposed from a second side wall, the first and second side walls extending between the leading and trailing edges;
      a first acoustic panel that extends at least partially across an outer surface of the first side wall; and
      a second acoustic panel that extends at least partially across the second side wall.
9. The inlet system as in any preceding clause, wherein at least one of the first side wall or the second side wall comprises a plurality of apertures, wherein at least a portion of the apertures are disposed beneath the first acoustic panel or the second acoustic panel.
10. The inlet system as in any preceding clause, wherein the baffle comprises a cavity defined laterally between the first and second side walls.
11. The inlet system as in any preceding clause, further comprising an acoustic material disposed within the cavity.
12. The inlet system as in any preceding clause, wherein at least one of the first acoustic panel or the second acoustic panel comprises an acoustically permeable material.
13. The inlet system as in any preceding clause, wherein at least one of the first acoustic panel or the second acoustic panel comprises an acoustically permeable material.
14. The inlet system as in any preceding clause, wherein the acoustically permeable material provides a sound level reduction of less than 1.5db.
15. The inlet system as in any preceding clause, wherein at least one of the first acoustic panel or the second acoustic panel has a surface roughness of 1mm or less.
16. A gas turbine, comprising:
   an inlet section, a compressor downstream from the inlet section, a combustion section downstream from the compressor and a turbine downstream from the combustion section, the inlet system having an inlet duct, a silencer assembly disposed downstream from the inlet duct and an outlet duct disposed downstream from the silencer assembly and in fluid communication with the compressor, wherein the silencer assembly comprises:
      a duct;
      a baffle disposed within the duct and arranged substantially parallel to a flow of air, the baffle having a leading edge portion, a trailing edge portion longitudinally spaced from the leading edge portion and a first side wall laterally opposed from a second side wall, the first and second side walls extending between the leading and trailing edges;
      a first acoustic panel that extends at least partially across an outer surface of the first side wall; and
      a second acoustic panel that extends at least partially across the second side wall.
17. The gas turbine as in any preceding clause, wherein at least one of the first side wall or the second side wall comprises a plurality of apertures, wherein at least a portion of the apertures are disposed beneath the first acoustic panel or the second acoustic panel.
18. The gas turbine as in any preceding clause, wherein the baffle comprises a cavity defined laterally between the first and second side walls and further comprises an acoustic material disposed within the cavity and wherein at least one of the first acoustic panel or the second acoustic panel comprises an acoustically permeable material.
19. The gas turbine as in any preceding clause, wherein at least one of the first acoustic panel or the second acoustic panel comprises an acoustically permeable material that provides a sound level reduction of less than 1.5db.
20. The gas turbine as in any preceding clause, wherein at least one of the first acoustic panel or the second acoustic panel has a surface roughness of 1mm or less.

## Claims

1. An inlet system (38) for a gas turbine, comprising:
an inlet duct (40), a silencer assembly (46) disposed downstream from the inlet duct (40) and an outlet duct (44) disposed downstream from the silencer assembly (46), wherein the silencer assembly (46) comprises:
a duct (50); and
a plurality of laterally spaced baffles (48) disposed within the duct (50) and arranged substantially parallel to a flow of air, each baffle (48) having a leading edge portion (106), a trailing edge portion (108) portion longitudinally spaced from the leading edge portion (106) and a pair of laterally opposing side walls (102), (104) that extend between the leading and trailing edge portions (106), (108);
wherein each baffle (48) includes at least one acoustic panel (120), (122) that extends at least partially across one side wall (102), (104) of the pair of side walls (102), (104).

2. The inlet system (38) as in claim 1, wherein each side wall (102), (104) of each baffle (48) comprises a plurality of apertures (114), wherein one or more of the apertures (114) are disposed beneath the acoustic panel (120), (122).

3. The inlet system (38) as in claim 1 or 2, wherein each baffle (48) comprises a cavity (112) defined laterally between the opposing side walls (102), (104).

4. The inlet system (38) as in claim 3, further comprising an acoustic material (110) disposed within the cavity (112).

5. The inlet system (38) as in any of claims 1 to 4, wherein the acoustic panel (120), (122) comprises an acoustically permeable material (110).

6. The inlet system (38) as in any of claims 1 to 5, wherein the acoustic panel (120), (122) comprises acoustically permeable material (110) that provides a sound level reduction of less than 1.5db.

7. The inlet system (38) as in any preceding claim, wherein the acoustic panel (120), (122) has a surface roughness of 1mm or less.

8. An inlet system (38) for a gas turbine, comprising:
an inlet duct (40), a transition duct (50) disposed downstream from the inlet duct (40), a silencer assembly (46) disposed downstream from the transition duct (50) and an outlet duct (44) disposed downstream from the silencer assembly (46), wherein the silencer assembly (46) comprises:
a duct (50);
a baffle (48) disposed within the duct (50) and arranged substantially parallel to a flow of air, the baffle (48) having a leading edge portion (106), a trailing edge portion (108) portion longitudinally spaced from the leading edge portion (106) and a first side wall (102), laterally opposed from a second side wall (104), the first and second side walls (102), (104) extending between the leading and trailing edge portions (108);
a first acoustic panel (120) that extends at least partially across an outer surface of the first side wall (102); and
a second acoustic panel (122) that extends at least partially across the second side wall (104).

9. The inlet system (38) as in claim 8, wherein at least one of the first side wall (102) or the second side wall (104) comprises a plurality of apertures, wherein at least a portion of the apertures (114) are disposed beneath the first acoustic panel (120) or the second acoustic panel (122).

10. The inlet system (38) as in claim 8 or 9, wherein the baffle (48) comprises a cavity (112) defined laterally between the first and second side walls (102), (104).

11. The inlet system (38) as in claim 10, further comprising an acoustic material (110) disposed within the cavity (112).

12. The inlet system (38) as in any of claims 8 to 11, wherein at least one of the first acoustic panel (120) or the second acoustic panel (122) comprises an acoustically permeable material (110).

13. The inlet system (38) as in claim 12, wherein the acoustically permeable material (110) provides a sound level reduction of less than 1.5db.

14. The inlet system (38) as in any of claims 8 to 13, wherein at least one of the first acoustic panel (120) or the second acoustic panel (122) has a surface roughness of 1mm or less.
